# EUROPEAN PATENT APPLICATION

(11) **EP 2 199 946 A1**
(43) Date of publication of application: **23.06.2010**
(21) Application number: 09170898.2
(22) Date of filing: 22.09.2009
(51) Int. Cl.: G06K 7/00

(54) **Device configuration system and method**

(30) Priority: 18.12.2008 US 338470
(71) Applicant: NCR Corporation, Duluth, GA 30096 (US)
(72) Inventor: Herwig, Nathanial, Lawrenceville, GA 30043 (US); Claessen, Albertus, Oakwood,, GA 30566 (US)
(74) Representative: MacLeod, Roderick William

(57) **Abstract**

A device configuration method comprises transferring configuration data between a terminal (104) and an electronic device (105), such as a self-service terminal, wirelessly whilst the electronic device (105) is within packaging (1 05a) and is powered down. The electronic device (105) stores the configuration data locally at a wireless receiver and a core processor (134) interrogates the wireless receiver when the electronic device (105) is powered up. A system for enacting the device configuration method is also disclosed.

## Description

The present invention relates to a device configuration system and method. More particularly, but not exclusively, it relates to a contactless device configuration system and method.

Many electronic devices require the installation of configuration and/or customisation settings to tailor the functionality and customer specificity of the device. In general, the more complex the device is, the more complex and time-consuming the configuration process can be. Many self-service terminals (SSTs) and retail point of sale (POS) devices require substantial customisation prior to being delivered from the manufacturer to customer sites. For example, each barcode scanner has to be customised to meet the requirements of the particular retailer to which they are to be sold and can hold many different settings in non-volatile RAM (NVRAM).

As many production lines are automated, the configuration of devices is usually one of the final steps prior to the device being shipped. This requires an additional intervention in the production process after manufacturing operations are complete, resulting in a slowing of output of devices from the factory to the customer. Very often the device has to be removed from packaging to allow the configuration data to be uploaded. This is costly, time consuming and increases the likelihood of damage to the device, and also increases the likelihood of incorrect repackaging of the device for shipment.

Current methods of configuring devices range from manually setting switches, to changing settings using controls located on the device, to downloading configuration data from a server or PC. The manual setting of switches and downloading of configuration data from a server or PC involves the manual intervention with the device, either by manually actuating switches or connecting a cable to the device. This introduces the possibility of damaging the device, or, particularly in the case of setting switches, installing the incorrect settings due to user error.

Furthermore, these techniques typically require the device to be powered up, or switched on, for new settings to be loaded on to the device. This restricts the rate at which devices can have suitable configuration data uploaded on to them as they must be powered up, reconfigured and powered down. This impacts upon the throughput and efficiency of a production line.

In another scenario, the reconfiguration of the device takes place at a warehouse just prior to being shipped to the customer, after the device has left the manufacturing facility. Often, the warehouse is geographically separate from the manufacturing facility. The personnel at the warehouse are often not technically trained. This introduces the possibility of the incorrect configuration data being installed on to the device by human error, or the device being damaged in the installation of the configuration data.

According to a first aspect of the present invention there is provided a device configuration system comprising: a programmer unit comprising a transmitter, and a programmer processor; an electronic device comprising a tag, and a device processor; the tag comprising an aerial, a tag processor and a communications port; the programmer processor being arranged to receive configuration data and to store the configuration data locally; the transmitter being arranged to transmit the configuration data to the tag; the aerial being arranged to receive the configuration data from the transmitter and to pass the configuration data to the tag processor where the configuration data is stored; and the device processor being arranged to access the configuration data via the communications port upon application of power to the electronic device.

Using a wireless, typically radio frequency, based system, which avoids having to open packaging, to configure electronic devices substantially lowers the cost of the process. Such a system also increases the resilience of the configuration process by allowing the manufacturer to update the configuration to incorporate a newer version, or to cancel a customer order and reconfigure their units for a different customer based on changing order quantities or priorities.

The tag may be an RFID tag. The transmitter may be arranged to modulate the configuration data on to a radio-frequency carrier wave. The RFID tag may be arranged to demodulate the configuration data and the carrier wave.

The tag processor may comprise a dedicated function state machine. The function state machine may be arranged to provide RFID protocol functionality and associated memory.

The programmer unit may comprise a hand held device. The hand held device may have a transmission range of 15-20 cm, or possibly up to 5 metres. The hand held device may interface with a host via any one of the following: a docking station, a wired connection, a wireless connection. Alternatively, the programmer unit may comprise a static broadcast device.

The programmer unit may comprise a receiver arranged to receive signals. The transmitter may be arranged to transmit an interrogation signal. The tag may be arranged to transmit product data to the programmer unit in response to receiving the interrogation signal. The programmer processor may be arranged to request device specific configuration data in response to the product data received from the tag. The programmer processor may be arranged to receive the device specific configuration data. The transmitter may be arranged to transmit a configuration signal comprising the device specific configuration data. The device specific configuration data may comprise at least one parameter and at least one device setting.

In certain embodiments the product data may comprise order specific configuration data from a production database stored at a host based upon the contents of the product data. The product data may comprise any of the following: customer details, geographic location of customer store, store identifier. The device specific configuration data may comprise customer and/or store specific parameters and/or settings, for example network settings, terminal types and/or names.

This allows devices to be configured with order specific configuration data, i.e. a customer's exact configuration requirements can be fulfilled automatically.

The programmer processor may be arranged to receive user selected configuration data, wherein the configuration data is selected by a user. The transmitter may be arranged to transmit a configuration signal comprising the user selected configuration data. The transmitter may be arranged to selectively transmit the user configuration data until a further set of user selected configuration data is received at the programmer processor.

The configuration data may comprise at least one of the following: a pointer or filename which contains the necessary configuration settings, asset management information for the device, other security tokens, for example encryption keys, required to access a network, for example a VPN, or to pass a firewall. Configuration settings may be in the form of any one of the following data types: ASCII, hexadecimal, binary string. The configuration settings may be arranged to be stored in memory associated with the tag.

The configuration data may comprise extensible mark-up language (XML).

The electronic device may comprise any of the following: an automated teller machine (ATM), an information kiosk, an electronic funds transfer (EFT) terminal, a financial services centre, a bill payment kiosk, a lottery kiosk, a postal services machine, a check-in and/or check-out terminal, a point-of-sale (POS) barcode scanner, POS terminal.

The system may comprise packaging at least partially enclosing the electronic device.

The programmer unit may be connected to a remote host arranged to store the configuration data. Alternatively, or additionally, the programmer unit may comprise a PC or server arranged to store the configuration data.

According to a second aspect of the present invention there is provided a method of device configuration comprising the steps of:
(i) receiving configuration data at a transmitter and storing the configuration data locally;
(ii) transmitting the configuration data to a tag connected to a processor of an electronic device via a wireless communications channel;
(iii) storing the configuration data locally in the tag; and
(iv) accessing the configuration data from the tag by the processor of the device upon application of power to the electronic device.

The method may comprise transmitting an interrogation signal from the transmitter. The method may comprise transmitting product data from the tag to a receiver of the programmer unit in response to receiving the interrogation signal. The method may comprise requesting device specific configuration data in response to the receiving the product data from the tag. The method may comprise receiving the device specific configuration data at the transmitter. The method may comprise transmitting a configuration signal comprising the device specific configuration data.

The method may comprise selecting order specific configuration data from a production database stored at a host based upon the contents of the product data. The product data may comprise any of the following: customer details, geographic location of customer store, store identifier. The configuration data may comprise customer and/or store specific parameters and/or settings, for example network settings, terminal types and/or names.

The method may comprise receiving user selected configuration data, wherein the configuration data is selected by a user. The method may comprise transmitting a configuration signal comprising the user selected configuration data from the transmitter. The method may comprise transmitting the user configuration data from the transmitter until a further set of user selected configuration data is received at the transmitter.

The configuration data may comprise at least one of the following: a pointer or filename which contains the necessary configuration settings, asset management information for the device, other security tokens, for example encryption keys, required to access a network, for example a VPN, or to pass a firewall. Configuration settings may be in the form of any one of the following data types: ASCII, hexadecimal, binary string. The configuration settings may be arranged to be stored in memory associated with the tag.

The electronic device may comprise any of the following: an automated teller machine (ATM), an information kiosk, an electronic funds transfer (EFT) terminal, a financial services centre, a bill payment kiosk, a lottery kiosk, a postal services machine, a check-in and/or check-out terminal, a point-of-sale (POS) barcode scanner, POS terminal.

The method may comprise having the electronic device packaged prior to step (ii).

The use of an RFID tag system allows for the uploading of configuration data to an RFID tag following packaging of the target device for shipping.

The method may comprise executing steps (ii) and (iii) whilst the device is powered down.

The use of an RFID tag system allows for the uploading of configuration data to an RFID tag whilst the target device itself is powered down.

The method may comprise storing the configuration data at a remote host.
The method may comprise storing the configuration data at a data storage device of the programmer unit.

According to a third aspect of the present invention there is provided software which, when executed on a processor of a tag, causes the processor to: demodulate an interrogation signal from a carrier wave; modulate product data on a further carrier wave to form a product signal; demodulate configuration data from a configuration signal; store the configuration data locally at the tag processor; and output the configuration data to a further processor in response to a request associated with the further processor receiving power.

According to a fourth aspect of the present invention there is provided software which, when executed on a processor of an electronic device, causes the processor to: request configuration data from a tag, comprising an element of the electronic device, upon receiving power; receive said configuration data, if present; and install said configuration data upon components of the electronic device.

According to an fifth aspect of the present invention there is provided a method of improving the efficiency of a production line comprising using the method of the second aspect of the present invention to configure electronic devices on said production line.

An embodiment of the invention will now be described, by way of example only, with reference to the accompanying drawings, in which:
Figure 1 is a schematic diagram of an embodiment of a device configuration system according to an embodiment of the present invention;
Figure 2 is a schematic diagram of an RFID tag of the system of Figure 1; and
Figure 3 is a flowchart detailing the steps of an embodiment of a method of device configuration according to a further embodiment of the present invention.

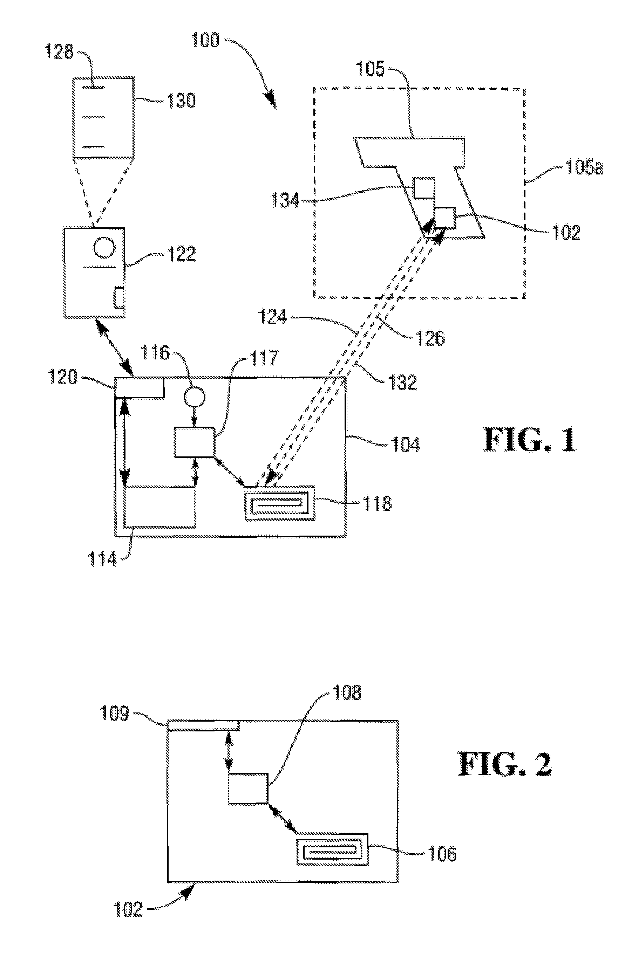

Referring now to Figure 1, an RFID device configuration system 100 comprises an RFID tag 102 and a tag programmer 104. The RFID tag 102 comprises part of an electronic device for example a POS barcode scanner 105. Typically, the scanner 105 requires customisation prior to shipment from the manufacturer to the customer, and is contained within a shipping container 105a, usually a cardboard container. When the scanner 105 is packaged it will be usual for it to be powered down, i.e. without a connection to an external power source.

The RFID tag 102 comprises an aerial 106, an integrated circuit (IC) 108 and a communications port 109. The IC 108 stores information, for example device configurations and parameters, processes information, and modulates and demodulates received radio-frequency signals. The IC 108 of the tag 102 extracts sufficient power from the interrogation signal to power its operation. The IC 108 demodulates the interrogation signal, for example in the case of a backscattering passive tag by means of a Schottky diode that is impedance matched to the aerial 106. In one embodiment the IC 108 is a conventional microprocessor. In an alternative embodiment, the IC 108 is a dedicated function state machine providing all the RFID protocol functionality and associated memory.

Typically, for high frequency, 3 - 30 MHz, applications the aerial 106 is a lithographically formed metal spiral. For ultra high frequency applications, 300 MHz - 3 GHz, a bent or meandered dipole antenna aerial 106 with impedance matching to the IC 108 may be used.

In the present embodiment the RFID tag 102 is a passive RFID tag that derives power for its operation from signals received at the aerial 106 and will be described in detail as such. However, it will be appreciated that the present invention is equally applicable to semi-passive and active RFID tags as it is to passive RFID tags. A semi-passive tag incorporates a power source that powers the IC. An active tag comprises a power source that powers the IC and provides power to the output of a broadcast signal in response to a signal from the tag programmer 104.

In the case of passive and semi passive tags a power source in the form of a battery, for instance a coin cell, is provided. The battery powers the tag 102 while the scanner is powered down. In one embodiment the tag 102 is designed such that it is powered off (sleep mode) and draws only a very small current, typically less than a microampere from the battery in sleep mode. A wake-up signal received at the aerial 106 is rectified and generates a voltage to "wake up" the IC 108. In an alternative embodiment, the tag IC 108 "wakes" up based on a timer clock running on the IC 108 and checks for the presence of an interrogation signal. It can then power up a transmitter and respond to the interrogation signal.

Such scheme will allow higher sensitivity, a larger communications distance and higher communications data rates than passive RFID tags.

In some embodiments, the reconfiguration of devices can be executed remotely from a central office without manual intervention provided that the warehouse is equipped with broadcast transmitters. This removes the requirement for an operator to be physically present at the point of device configuration.

The communications port 109 communicates with the remaining circuitry of the scanner 105 as will be described in detail hereinafter.

The tag programmer 104 comprises a processor 114, a radio-frequency source 116, a modulator/de-modulator unit 117, an aerial 118 and a communications port 120. The communications port 120 links to a host 122 typically a server or PC. Typically, the tag programmer 104 is a hand held device such that the programming of the RFID tag 102 is localised, typically within 15-20cm, to an individual scanner 105 without affecting other devices stored nearby. In an alternative implementation, the tag programmer 104 may be a broadcast device that broadcasts configuration data over a large area, for example a production line or a warehouse.

In one mode of operation, the radio-frequency source 116 generates a radio-frequency interrogation signal 124, typically, but not necessarily, a continuous wave (CW) signal. The interrogation signal 124 is modulated onto a carrier wave at the modulation/de-modulation unit 117 and broadcast via the aerial 118. Any suitable modulation unit 117 known to a person skilled in the art can be employed.

The interrogation signal 124 is received at the aerial 106 of the tag 102. The IC 108 of the tag 102 demodulates the interrogation signal, for example by means of a Schottky diode that is impedance matched to the aerial 106. Other suitable demodulators known to a person skilled in the art can be employed. The IC 108 then determines if the interrogation signal is valid, for example by checking for an embedded security code within the signal. If the interrogation signal is valid, the IC 108 accesses product data stored locally on the RFID tag 102 and modulates this product data onto a radio-frequency carrier wave to generate a product signal 126. The product signal 126 is transmitted via the tag's aerial 106 to the tag programmer's aerial 118 from where it passes to the modulation/demodulation unit 117 where the product data is extracted from the carrier wave and passed to the tag programmer's processor 114. The processor 114 requests appropriate configuration data from the host 122 via the communications port 120, based upon the product data received at the processor 114. The host 122 selects configuration data 128 from a database 130 dependent upon the request received from the processor 114. Typical examples of configuration data 128 include, but are not limited to, device configuration settings, a pointer or filename which contains the necessary configuration settings, asset management information for the device, encryption keys or other security tokens required to access networks, VPNs, etc.

The host 122 then passes the configuration data 128 to the processor 114 via the communications port 120. The configuration data 128 is then modulated onto a carrier wave at the modulation/de-modulation unit 117 and broadcast as a programming signal 132 via the aerial 118. Any suitable modulation unit 117 known to a person skilled in the art can be employed.

The programming signal 132 is received at the aerial 106 of the tag 102. The IC 108 demodulates the programming signal 132 such that the configuration data 128 is separated from its carrier signal, for example in the case of a backscattering tag by means of a Schottky diode that is impedance matched to the aerial 106. Other suitable demodulators known to a person skilled in the art can be employed. The IC 108 then determines if the programming signal is valid, for example by checking for an embedded security code within the signal. If the interrogation signal is valid, the IC 108 stores configuration data 128 locally. Usually, the configuration data 128 will be in the form of an industry standard format, for example extensible mark-up language (XML).

This mode of operation introduces flexibility into the programming of devices being output from a manufacturing facility as it allows for each device passing the tag programmer to have configuration data relevant to its final destination to be uploaded without the intervention of a human operator to vary the configuration data transmitted by the tag programmer 104.

In an alternative embodiment, a user selects configuration data 128 from the database 130, using for example a keyboard, or GUI on a screen, of the host 122. The terminal passes the configuration data to the processor 114 via the communications port 120. The configuration data 128 is then modulated onto a carrier wave at the modulation/de-modulation unit 117 and broadcast as a programming signal 132 via the aerial 118. Any suitable modulation unit 117 known to a person skilled in the art can be employed.

The programming signal 132 is received at the aerial 106 of the tag 102. The IC 108 demodulates the programming signal 132 such that the configuration data 128 is separated from its carrier signal, as described hereinbefore. The IC 108 then determines if the interrogation signal is valid, for example by checking for an embedded security code within the signal. If the interrogation signal is valid, the IC 108 stores configuration data 128 locally.

The configuration data 128 broadcast from the tag programmer 104 remains unchanged until it is changed by the user.

This arrangement is useful where a large volume of devices, for example where a run of a production line is to be sent to a single customer, are to be configured with the same configuration data.

The manufacturer ships the scanner 105 to the customer site where it is installed. When the customer powers-up the scanner 105 a processor 134 of the scanner 105 accesses the RFID tag's memory to determine if configuration data 128 is present. If configuration data 128 is found to be present it is extracted by the scanner's processor 134 and is written to the appropriate control registers and memory locations, for example to update the NVRAM settings. In an alternative implementation, the configuration data 128 is encrypted at the RFID tag's IC 108 and must be decrypted prior to being written to the control registers and or memory locations. In this implementation, the decryption of the configuration data 128 can be carried out either at the RFID tag's IC 108 in response to a request from the scanner's processor 134, or at the scanner's processor 134 following the extraction of the configuration data 128 from the RFID tag's IC 108.

Where the internal memory of the tag's IC 108 is limited a filename or other "pointer" to valuable information can be stored at the IC 108. This might be a filename of a hexidecimal file containing a firmware update, or the location of an application update or script file. Typically the pointer arrangement is such that all, or the most likely, configuration data sets are stored in the scanners memory. The pointer then will select which configuration data set is to be used. If memory size of the IC 108 allows, the pointer can also identify a limited number of modifications to that configuration. Additional firmware, BIOS and software updates can be delivered to the scanner 105 *in situ* at the customer's premises by use of a mobile RFID transmitter that is programmed with the update.

The RFID tag can also be used to transfer asset information from POS scanner 105 to the customer's maintenance server via an RFID link. The scanner 105 maintains asset information such as, for example, serial number, BIOS version, CPU type and speed, RAM and disc drive size and types, and attached peripherals in the RFID tag 102. The maintenance server interrogates the tag 102 periodically to monitor the assets in question. This allows asset management for a whole range of information technology assets to be collected.

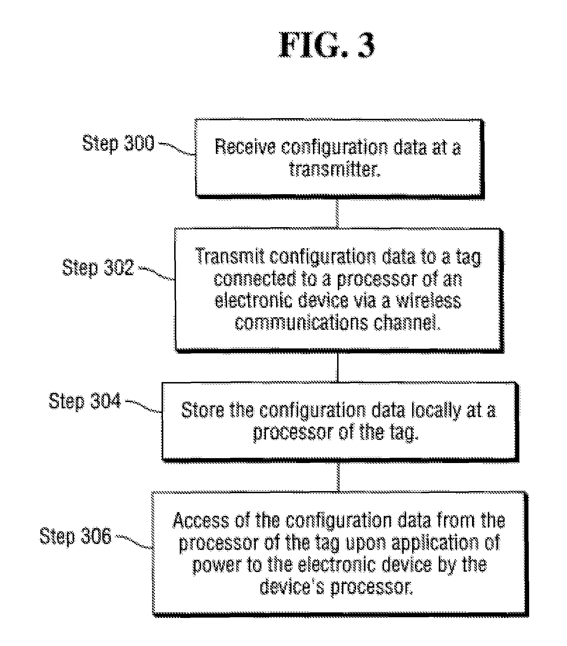

Referring now to Figure 3, a method of device configuration comprises receiving configuration data at a transmitter (Step 300). The transmitter transmits the configuration data to a tag connected to a processor of an electronic device, typically a self-service device or terminal, via a wireless communications channel, typically an RFID channel (Step 302). The tag's processor stores the configuration data locally at a processor of the tag (Step 304). The device's processor accesses the configuration data from the processor of the tag upon application of power to the electronic device (Step 306).

It will be appreciated that although described with reference to a system wherein configuration data is stored at a remote host the present invention is equally applicable to the situation where the configuration data is stored on a data storage device locally the transmitter, for example at a PC with an RFID programmer unit attached.

It will be appreciated that although described with reference to RFID the present invention can be implemented using any contactless data communication technique, for example near-field communications (NFC).

It will be further appreciated that although described with reference to a POS scanner the present invention is applicable to any suitable self-service terminal (SST) or network of SSTs. Examples of suitable SSTs include, but are not limited to, an automated teller machine (ATM), an information kiosk, an electronic funds transfer (EFT) terminal a financial services centre, a bill payment kiosk, a lottery kiosk, a postal services machine, a check-in and/or check-out terminal such as those used in the retail, hotel, car rental, gaming, healthcare, and airline industries, or the like. The present invention is equally applicable to the configuration of electronic peripheral devices such as printers, DynaKeys, cash/coin dispensers, and is not limited to the configuration of SSTs.

As described herein the SST comprises one or more modules each of which is operable to perform at least one specific function. Typically, the module implements its function either in response to a customer action and/or a command received from a PC core (which is also a module) of the SST. Non-limiting examples of modules include: display, journal printer, operator panel, encrypting keypad, PC core, etc.

Typically, each module comprises a processor to enable the module to perform its function, and a communications facility to enable the module to communicate with the controller, but in some instances this may not be essential.

Each module comprises one or more devices that contributes to the execution of the module's respective function. Typically, each device comprises a replaceable part within the module. Non-limiting examples of devices include: for the display module, a display panel, a display panel housing, and the like.

Each device comprises one or more components configured to enable the device to contribute to the execution of the module's function.

It will also be appreciated that the steps of the methods described herein may be carried out in any suitable order, or simultaneously where appropriate. The methods described herein may be performed by software in machine readable form on a tangible storage medium or as a propagating signal.

Various modifications may be made to the above described embodiment without departing from the spirit and the scope of the invention.

Typical forms of settings that are installed onto devices comprise settings, selectable parameters, BIOS settings, or a new version of firmware.

## Claims

1. A device configuration system (100) comprising:
a programmer unit (104) comprising a transmitter (117,118), and a programmer processor (114);
an electronic device (105) comprising a tag (102), and a device processor (134);
the tag (102) comprising an aerial (106), a tag processor (108) and a communications port (109);
the programmer processor (114) being arranged to receive configuration data and to store the configuration data locally;
the transmitter (117,118) being arranged to transmit the configuration data to the tag (102);
the aerial (106) being arranged to receive the configuration data from the transmitter (117,118) and to pass the configuration data to the tag processor (108) where the configuration data is stored; and
the device processor (134) being arranged to access the configuration data via the communications port (109) upon application of power to the electronic device (105).

2. The system of Claim 1, wherein the tag (102) comprises an RFID tag.

3. The system of Claim 1 or 2, wherein the programmer unit (104) comprises a hand held device.

4. The system of Claim 3, wherein the hand held device interfaces with a host via any one of the following: a docking station, a wired connection, a wireless connection.

5. The system of any preceding Claim, wherein the tag (102) is arranged to transmit product data to the programmer unit in response to receiving an interrogation signal (124) from the transmitter (117,118) and wherein the programmer processor (114) is arranged to request device specific configuration data in response to the product data received from the tag (102) and wherein the transmitter (117,118) is arranged to transmit a configuration signal (132) comprising the device specific configuration data.

6. The system of any preceding Claim, wherein the programmer processor (114) is arranged to receive user selected configuration data, the transmitter (117,118) being arranged to transmit a configuration signal (132) comprising the user selected configuration data.

7. The system of any preceding Claim, wherein the configuration data comprises at least one of the following: a pointer or filename which contains the necessary configuration settings, asset management information for the device, other security tokens, for example encryption keys, required to access a network, to pass a firewall.

8. The system of any preceding Claim, wherein the electronic device (105) comprises one of the following: an automated teller machine (ATM), an information kiosk, an electronic funds transfer (EFT) terminal, a financial services centre, a bill payment kiosk, a lottery kiosk, a postal services machine, a check-in and/or check-out terminal, a point-of-sale (POS) barcode scanner, a POS terminal.

9. A method of device configuration comprising the steps of:
(i) receiving configuration data at a transmitter (117,118);
ii) transmitting the configuration data to a tag (102) connected to a processor (134) of an electronic device (105) via a wireless communications channel;
(iii) storing the configuration data locally in the tag (102); and
(iv) accessing the configuration data from the tag (102) by the processor (134) of the device (105) upon application of power to the electronic device (105).

10. The method of Claim 9 comprising transmitting product data from the tag (102) to a receiver of the programmer unit (104) in response to receipt of an interrogation signal (124) from the transmitter (117,118).

11. The method of Claim 9 or 10, comprising transmitting a configuration signal (132) comprising the device specific configuration data.

12. The method of any of Claims 9 to 11, comprising transmitting a configuration signal comprising the user selected configuration data from the transmitter.

13. The method of any of Claims 9 to 12, wherein the tag (102) is an RFID tag.

14. An electronic device (105) comprising the tag of Claim 1.

15. Software, which when executed on a processor (108) of a tag (102), causes the processor (108) to:
demodulate an interrogation signal (124) from a carrier wave;
modulate product data on a further carrier wave to form a product signal (126);
demodulate configuration data from a configuration signal (132);
store the configuration data locally at the processor (108); and
output the configuration data to a further processor (134) in response to a request associated with the further processor (134) receiving power.
